(19) Europäisches Patentamt / European Patent Office / Office européen des brevets

(11) **EP 3 650 632 A1**

(12) **DEMANDE DE BREVET EUROPEEN**

(43) Date de publication:
**13.05.2020  Bulletin 2020/20**

(51) Int Cl.:
***E21B 43/20*** *(2006.01)*

(21) Numéro de dépôt: **19203281.1**

(22) Date de dépôt: **15.10.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.11.2018  FR 1860212**

(71) Demandeur: **IFP Energies nouvelles
92852 Rueil-Malmaison Cedex (FR)**

(72) Inventeurs:
• **BOURBIAUX, Bernard
  92852 RUEIL-MALMAISON CEDEX (FR)**
• **NGUYEN, Quang Long
  92852 RUEIL-MALMAISON CEDEX (FR)**

(54) **PROCEDE DE RECUPERATION D'HYDROCARBURES DANS UN RESERVOIR GEOLOGIQUE PAR INJECTION D'EAU FAIBLEMENT SALINE**

(57)    L'invention concerne un procédé pour la récupération des hydrocarbures présents dans un réservoir géologique, au moyen de l'injection d'une solution aqueuse faiblement saline.

Au moyen de mesures réalisées en laboratoire sur un échantillon de roche du réservoir pour au moins deux valeurs de salinité, on calibre un modèle représentatif de l'évolution des paramètres d'écoulement en fonction de la salinité de la solution aqueuse. Puis au moyen d'un simulateur d'écoulement incorporant le modèle calibré, on simule, avec et sans effets capillaires, l'injection de solutions aqueuses dans l'échantillon pour au moins les deux valeurs de salinité et on détermine une saturation résiduelle en huile microscopique pour chacune des valeurs de salinité. Puis à partir du simulateur d'écoulement incorporant le modèle calibré et les valeurs de saturation résiduelle microscopique en huile déterminées, on détermine un schéma d'exploitation du réservoir et on exploite lesdits hydrocarbures dudit réservoir selon le schéma d'exploitation.

**EP 3 650 632 A1**

**Description**

La présente invention concerne le domaine de l'exploitation d'hydrocarbures contenus dans un réservoir géologique, plus particulièrement la récupération assistée de ces hydrocarbures par injection d'une solution aqueuse saline, dite à faible salinité.

L'exploitation d'un réservoir pétrolier par récupération primaire consiste à extraire, via un puits dit de production, le pétrole présent du réservoir par l'effet de surpression régnant naturellement au sein du réservoir. Cette récupération primaire ne permet d'accéder qu'à une faible quantité du pétrole contenu dans le réservoir, de l'ordre de 10 à 15% tout au plus.

Pour permettre de poursuivre l'extraction du pétrole, des méthodes secondaires de production sont employées, quand la pression du réservoir devient insuffisante pour déplacer le pétrole encore en place. Notamment, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le ou les puits de production. Une technique usuelle dans ce cadre est l'injection d'eau (désignée également par le terme anglais « waterflooding »), dans laquelle de grands volumes d'eau sont injectés sous pression dans le réservoir via des puits injecteurs. L'eau injectée entraîne une partie du pétrole qu'elle rencontre et le pousse vers un ou plusieurs puits producteurs. Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Les industriels manifestent ces dernières années un fort intérêt pour un procédé de récupération d'hydrocarbures par injection d'eau à salinité dite "réduite" ("Low Salinity injection" en anglais) ou encore "adaptée" ("Smart Water injection" en anglais). En effet, il s'agit d'un procédé simple de mise en œuvre, peu onéreux (coûts de dessalement essentiellement) et qui se révèle particulièrement efficace pour la récupération de l'huile piégée dans les pores d'un réservoir géologique.

**État de la technique**

Les documents suivants seront cités au cours de la description :

Jackson, M.D., Vinogradov, J., Hamon, G., Chamerois, M. (2016) Evidence , mechanisms and improved understanding of controlled salinity waterflooding part 1: Sandstones, Fuel 185, 772-793.
Jerauld, G.R., Lin, C.Y., Webb, K.J. and Seccombe, J.C. (2008) Modeling Low-Salinity Waterflooding, SPE Reservoir Evaluation & Engineering, 1000-1012, December.Skauge, A. (2013) Low Salinity Flooding - A Critical Review, paper A11 presented at the 17th European Symposium on IOR, 16-18 April 2013.
Yousef, A.A., Al-Saleh, S., Al-Kaabi, A. and Al-Jawfi, M. (2011) Laboratory Investigation of the Impact of Injection-Water Salinity and Ionic Content on Oil Recovery From Carbonate Reservoirs, paper SPE 137634, SPE Reservoir Evaluation & Engineering Journal, 14(5), 578-593.

Comme indiqué dans le document (Jackson et al., 2016), les mécanismes physiques en jeu dans les procédés "Low Sal" (ou "faible salinité") demeurent mal compris bien que de nombreuses études aient été réalisées et de nombreuses données acquises. De ce fait, l'industrie ne dispose pas de méthode d'optimisation de l'eau d'injection pour un système roche-fluides de réservoir donné.

Il est toutefois aujourd'hui reconnu que les effets d'une réduction de la salinité sur la récupération d'huile en place peuvent être vus comme la conséquence d'une modification de mouillabilité du milieu poreux. Or la mouillabilité du milieu poreux impacte les données d'entrée des modèles de déplacement des fluides en place dans un réservoir que sont les perméabilités relatives (kr) et les pressions capillaires (Pc), qui sont des fonctions de la saturation.

Différents modèles, plus ou moins complexes, prenant en compte une évolution de ces paramètres (kr, Pc) en fonction de la salinité ont ainsi été construits. La construction de ces modèles passe par des mesures réalisées à l'échelle du laboratoire (sur carottes provenant du réservoir ou d'un analogue géologique), à partir desquelles on calibre les paramètres des modèles, paramètres qui peuvent être nombreux.
On connait notamment le document (Jerauld et al., 2008) qui utilise un modèle diphasique modifié pour reproduire les effets de salinité. Il consiste à fournir, sous forme de table, une loi de variation (décroissance linéaire par défaut) de la saturation résiduelle en huile $S_{orw}$ avec la salinité entre deux bornes maximale (HS : High Salinity) et minimale (LS : Low Salinity) de salinité, et à définir deux jeux de courbes de perméabilités relatives à l'eau et à l'huile et de pression capillaire correspondant à chacune de ces deux bornes de salinité HS et LS. A une salinité donnée, les valeurs de perméabilité relative et de pression capillaire sont alors interpolées linéairement entre les courbes de kr et Pc à haute et basse LS en fonction d'une variable de salinité $\theta$.

Plus précisément, dans ce document, les valeurs de kr et de Pc à une saturation en huile $S_o$ donnée quelconque et à une salinité donnée quelconque pour laquelle la saturation résiduelle en huile vaut $S_{orw}$ sont déterminées comme suit :

$$k_{rw} = \theta \, k_{rw}^{HS}(S^*) + (1-\theta) \, k_{rw}^{LS}(S^*)$$

$$k_{row} = \theta \, k_{row}^{HS}(S^*) + (1-\theta) \, k_{row}^{LS}(S^*)$$

$$P_{cow} = \theta \, P_{cow}^{HS}(S^*) + (1-\theta) \, P_{cow}^{LS}(S^*)$$

où la variable d'interpolation $\theta$ est définie comme:

$$\theta = \frac{S_{orw} - S_{orw}^{LS}}{S_{orw}^{HS} - S_{orw}^{LS}}$$

et $S^*$ est la saturation en huile normée courante définie comme :

$$S^* = \frac{S_o - S_{orw}}{1 - S_{wi} - S_{orw}}$$

et où $S_{wi}$ est la saturation irréductible en eau.

De tels modèles peuvent être utilisés pour estimer l'efficacité d'un procédé de récupération de l'huile en place d'un réservoir géologique par injection d'une solution aqueuse faiblement saline, notamment en estimant l'évolution de la quantité d'huile résiduelle restant piégée dans les pores d'un réservoir géologique en fonction de la salinité. Ainsi, un procédé de récupération d'huile sera d'autant plus efficace que la saturation résiduelle en huile, après injection de l'eau saline, est faible.

Toutefois les systèmes fluides en considération (eau-huile) sont constitués de fluides immiscibles à tension interfaciale élevée (de l'ordre de la dizaine ou quelques dizaines de mN/m), ce qui a pour conséquence d'induire des effets capillaires, qui peuvent être sensibles à l'échelle de carottes de dimension réduite. Plus précisément, les effets capillaires entraînent une rétention du fluide mouillant en sortie de carotte. En conséquence, les mesures de production d'huile en sortie de carotte donnent accès à une saturation résiduelle en huile moyenne (notée $S_{orw}^{carotte}$ par la suite) et non à la véritable saturation résiduelle microscopique (notée $S_{orw}$ par la suite) qui constitue pourtant l'information essentielle recherchée en fonction de la salinité de l'eau injectée. Ces effets capillaires sont évoqués dans le document (Skauge, 2013), qui préconise d'effectuer des mesures locales (in situ) de saturation, de mise en œuvre longue et difficile, puisque directement au niveau du réservoir géologique.

Ainsi, les modèles actuels ne sont pas suffisamment fiables pour prédire l'efficacité d'un procédé d'injection d'eau à salinité réduite en termes de récupération d'huile et/ou nécessitent des mesures in situ difficiles et longues de mise en œuvre, et de ce fait, coûteuses.

La présente invention vise à pallier ces inconvénients. Ainsi, la présente invention concerne un procédé permettant une prédiction fiable de la saturation résiduelle en huile, via la saturation résiduelle en huile microscopique, en fonction de la salinité d'une solution aqueuse injectée dans un réservoir géologique, en vue du choix d'une salinité optimisant la récupération de l'huile en place. La présente invention associe pour ce faire mesures en laboratoire, en nombre limité, simples et rapides, et simulations numériques afin de calibrer un modèle représentatif de l'évolution de la saturation résiduelle microscopique en huile en fonction de la salinité injectée.

**Le procédé selon l'invention**

La présente invention concerne un procédé pour la récupération des hydrocarbures présents dans un réservoir géologique par injection d'une solution aqueuse saline dans ledit réservoir, au moyen d'un simulateur numérique d'écoulement incorporant un modèle représentatif de l'évolution de paramètres d'écoulement en fonction de la salinité de ladite solution aqueuse injectée, lesdits paramètres d'écoulement comprenant au moins une saturation résiduelle en huile, une perméabilité relative en eau, une perméabilité relative en huile, et une pression capillaire, ledit modèle étant fonction de constantes relatives à chacun desdits paramètres, et dans lequel :

A- à partir d'au moins un échantillon représentatif dudit réservoir, ledit échantillon ayant été restauré dans son état initial, on calibre ledit modèle selon au moins les étapes suivantes :

i. on injecte dans ledit échantillon au moins deux solutions aqueuses ayant des valeurs de salinité différentes et on mesure au moins une production d'huile et une perte de charge pour chacune desdites valeurs de salinité ;

ii. on réalise des mesures de pression capillaire pour au moins chacune desdites valeurs de salinité ;

iii. à partir desdites mesures, on détermine lesdites constantes dudit modèle relatives à chacun desdits paramètres ;

B- au moyen dudit simulateur incorporant ledit modèle calibré, on détermine une valeur de saturation résiduelle en huile microscopique pour au moins lesdites valeurs de salinité en appliquant au moins les étapes suivantes pour chacune desdites valeurs de salinité :

iv. on réalise une première simulation d'une injection d'une solution aqueuse pour ladite valeur de salinité dans ledit échantillon, ledit modèle étant appliqué pour ladite première simulation avec une pression capillaire nulle, et on détermine une première valeur de ladite saturation résiduelle en huile pour ladite valeur de salinité ;

v. on réalise une deuxième simulation d'une injection d'une solution aqueuse pour ladite valeur de salinité dans ledit échantillon, et on détermine une deuxième valeur de ladite saturation résiduelle en huile pour ladite valeur de salinité ;

vi. au moins à partir desdites première et deuxième valeurs de saturation résiduelle en huile simulées pour ladite valeur de salinité, on détermine ladite valeur de ladite saturation résiduelle en huile microscopique pour ladite valeur de salinité;

C- à partir dudit simulateur d'écoulement incorporant ledit modèle calibré et desdites valeurs de saturation résiduelle microscopique en huile déterminées pour au moins lesdites valeurs de salinité, on détermine un schéma d'exploitation dudit réservoir et on exploite lesdits hydrocarbures dudit réservoir selon ledit schéma d'exploitation.

Selon une mise en œuvre de l'invention, ledit modèle peut s'exprimer selon une formule du type :

$$G(V) = \left[F(V)\right]^{\beta_G} G^{\mathrm{mod}} + \left(1 - \left[F(V)\right]^{\beta_G}\right) G^{ini}$$

où G est un desdits paramètres d'écoulement dudit modèle, V est ladite salinité, et où $G^{\mathrm{mod}}$, $G^{ini}$ et $\beta_G$ sont lesdites constantes dudit modèle à calibrer pour ledit paramètre, et dans lequel G peut en outre être fonction d'une saturation en eau lorsque G correspond à ladite perméabilité relative à l'eau, ladite perméabilité relative à l'huile ou ladite pression capillaire.

Selon une mise en œuvre de l'invention, ladite valeur de saturation résiduelle en huile microscopique $S_{orw}$ pour une desdites valeurs de salinité peut être déterminée selon une formule du type :

$$S_{orw} = \frac{\left(2\, S_{orw}^{SIM} - S_{orw}^{carotte-SIM}\right)\left(1 - S_{wi}\right) - \left(S_{orw}^{SIM}\right)^2}{\left(1 - S_{wi} - S_{orw}^{carotte-SIM}\right)},$$

où $S_{orw}^{SIM}$ est ladite première valeur de saturation en huile résiduelle simulée pour ladite valeur de salinité, $S_{orw}^{carotte-SIM}$ est ladite deuxième valeur de saturation en huile résiduelle simulée pour ladite valeur de salinité, et $S_{wi}$ est une saturation en eau irréductible.

Selon une mise en œuvre de l'invention, lesdits paramètres d'écoulement peuvent comprendre en outre une saturation irréductible en eau, et on peut réaliser en outre une mesure de saturation irréductible en eau pour au moins chacune desdites valeurs de salinité à partir dudit échantillon.

Selon une mise en œuvre de l'invention, on peut déterminer ledit schéma d'exploitation en évaluant une pluralité de schémas d'exploitation en fonction d'au moins un critère prédéfini, ladite évaluation comprenant des simulations d'injection de solutions aqueuses pour différentes valeurs de salinité dans ledit réservoir, et on peut exploiter lesdits hydrocarbures dudit réservoir selon ledit schéma satisfaisant ledit critère.

Selon une mise en œuvre de l'invention, on peut exploiter lesdits hydrocarbures dudit réservoir en injectant ladite solution aqueuse saline, en forant au moins un puits injecteur et au moins un puits producteur dudit schéma d'exploitation, et en installant des infrastructures de production adaptées au développement du gisement.

D'autres caractéristiques et avantages du procédé selon l'invention, apparaîtront à la lecture de la description ci-après d'exemples non limitatifs de réalisations, en se référant aux Figures annexées et décrites ci-après.

Présentation succincte des figures

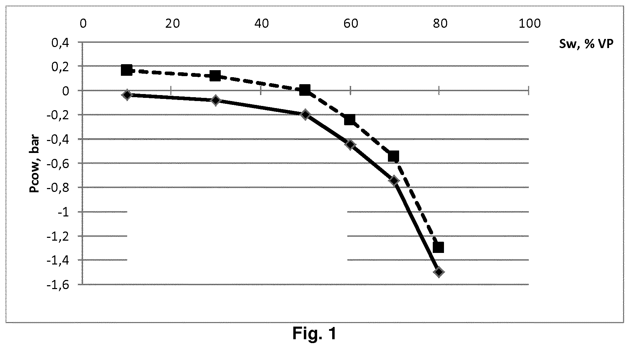

La Figure 1 présente un exemple de courbes de pression capillaire, dans le cas d'une salinité initiale et dans le cas d'une salinité modifiée.

**Description détaillée du procédé**

De façon générale, l'un des objets de l'invention concerne un procédé pour la récupération des hydrocarbures présents dans une réservoir géologique, au moyen de l'injection d'une solution aqueuse saline dans le réservoir géologique étudié.

Le procédé selon l'invention requiert de disposer d'au moins un échantillon représentatif du réservoir pétrolier considéré, prélevé par carottage in situ par exemple, ou bien provenant d'un analogue géologique. Selon l'invention, le ou les échantillons de roche utilisés pour la mise en œuvre du procédé selon l'invention sont restaurés dans leur état initial, c'est-à-dire tels qu'ils étaient dans le réservoir géologique étudié. Selon une mise en œuvre de l'invention, le ou les échantillons sont ainsi saturés en fluides présents dans le réservoir géologique étudié (huile et eau irréductible). Avantageusement, on mesure préalablement pour ce faire la saturation en eau connée ("connate saturation" en anglais). On peut avoir accès à une telle saturation au moyen par exemple de mesures diagraphiques réalisées in situ, au niveau du réservoir géologique étudié, ou par mesure du contenu en eau d'une carotte extraite par forage de ce réservoir et préservée. A noter que l'on distingue en principe la saturation connée de la saturation en eau irréductible qui est la saturation minimale en eau obtenue en laboratoire par drainage à l'huile. Toutefois, de manière générale, on peut s'attendre à ce que saturation en eau irréductible et saturation connée soit égales ou très proches car le processus de mise en place de l'huile au cours des temps géologiques est identique à celui simulé en laboratoire (drainage d'un réservoir initialement saturé d'eau par l'huile en migration dans ce réservoir). On considère par la suite que la saturation connée est égale à la saturation irréductible en eau et on la note $S_{wi}$.

Selon une conception de l'invention, pour réaliser cette restauration dans son état initial d'un échantillon de roche provenant du réservoir géologique étudié, on utilise un procédé consistant à saturer en eau l'échantillon sous vide de volume poreux VP, puis à déplacer l'eau en place dans cet échantillon par l'huile au moyen d'une pompe d'injection ou par centrifugation dans l'huile, en veillant à ce que le volume d'eau de l'échantillon $E_{prod}$ produit et remplacé ainsi par de l'huile conduise à une valeur de saturation irréductible en eau de l'échantillon (notée $S_{wi}$) proche de la valeur de

$$S_{wi} = \frac{VP - E_{prod}}{VP} \approx S_{wc}$$

saturation connée $S_{wc}$ mesurée en amont du procédé selon l'invention, soit ⁣. Enfin, une fois saturés en huile et eau irréductible, ce ou ces échantillons sont "vieillis" à la température du réservoir pour restaurer leur mouillabilité originelle. La procédure de vieillissement peut consister à laisser les échantillons saturés à l'intérieur d'une étuve à la température du réservoir durant quelques semaines.

Le procédé requiert en outre de disposer d'un simulateur numérique d'écoulement reposant sur un modèle représentatif de l'évolution de paramètres d'écoulement en fonction de la salinité d'une solution aqueuse injectée dans le réservoir géologique étudié. Selon l'invention, les paramètres d'écoulement fonction de la salinité comprennent au moins : la saturation résiduelle en huile $S_{orw}$, les perméabilités relatives à l'eau $k_{rw}$ et à l'huile $k_{ro}$ (qui sont en outre fonction de la saturation notée $S_w$ pour la phase aqueuse (saumure) et $S_o$ pour la phase hydrocarbure (huile)), ainsi que la pression capillaire du couple eau-huile $P_{cow}$ (qui est en outre fonction de la saturation). Selon une mise en œuvre de l'invention, les paramètres d'écoulement fonction de la salinité comprennent en outre la saturation irréductible en eau $S_{wi}$. Ce mode de réalisation peut être avantageusement utilisé dans le cas où la saturation irréductible en eau $S_{wi}$ varie de manière significative avec la salinité.

De manière non limitative, un simulateur d'écoulement apte à la mise en œuvre du procédé selon l'invention prédit l'impact d'un changement de salinité sur les paramètres d'écoulement à partir de valeurs de ces différents paramètres connues pour au moins deux valeurs de salinité de l'eau d'injection : une valeur dite "initiale" (identifiée par l'indice "ini" par la suite) et une valeur dite "modifiée" (identifiée par l'indice "mod" par la suite). Le simulateur d'écoulement selon l'invention vise ainsi à prédire les valeurs des paramètres d'écoulement $S_{orw}$, $k_{rw}$, $k_{ro}$ et $P_{cow}$ (et optionnellement $S_{wi}$), avantageusement pour une valeur de salinité dite "intermédiaire" par la suite, à partir au moins des valeurs de salinité initiale et modifiée fournies en entrée du simulateur. De manière non limitative, on appelle par la suite "salinité initiale" la valeur de salinité la plus élevée, correspondant à la salinité de l'eau d'injection disponible à proximité du champ (telle qu'une eau de mer), et on appelle "salinité modifiée" une salinité réduite par rapport à la salinité initiale. Avantageusement, la valeur choisie pour la "salinité modifiée" peut correspondre à une valeur de salinité en-deçà de laquelle la récupération de l'huile n'augmente plus, ou autrement dit, une valeur de salinité en-deçà de laquelle la saturation résiduelle en huile ne diminue plus.

De manière non limitative, le modèle représentatif de l'évolution des paramètres d'écoulement en fonction de la salinité représente la salinité de la solution aqueuse injectée dans le réservoir géologique étudié par une fonction F(V) où V est un paramètre représentatif de la salinité de la solution. Selon une mise en œuvre de l'invention, V peut être, de manière non limitative :

- la concentration en sels présents dans la solution : avantageusement, on peut définir une fonction F(V) par une

$$F(V) = \frac{Sal_{ini} - Sal}{Sal_{ini} - Sal_{mod}},$$

concentration en sels normée selon une formule du type : où Sal, $Sal_{ini}$, $Sal_{mod}$ sont respectivement les concentrations en sels intermédiaire, initiale et modifiée respectivement.

- la composition en ions présents dans la solution : avantageusement, on peut définir une fonction F(V) via la valeur normée de la racine carrée de la force ionique de la saumure de selon une formule du type :

$$F(V) = \frac{\sqrt{I_{ini}} - \sqrt{I}}{\sqrt{I_{ini}} - \sqrt{I_{mod}}},$$

où I, $I_{ini}$, $I_{mod}$ sont respectivement les forces ioniques intermédiaire, initiale et modifiée,

$$I = \frac{1}{2}\sum_j v_{wj} V_j^2,$$

la force ionique I étant définie comme où $V_j$ est la valence de l'ion $j$ présent en solution à la concentration molaire $V_{wj}$.

Selon l'invention, le modèle représentatif de l'évolution des paramètres d'écoulement en fonction de la salinité est fonction de constantes par rapport à la salinité, constantes qui sont à calibrer pour chaque réservoir géologique étudié.

Selon une mise en œuvre de l'invention, on peut utiliser un modèle représentatif de l'évolution des paramètres d'écoulement G en fonction de la salinité V défini selon une formule du type :

$$G(V) = \left[F(V)\right]^{\beta_G} G^{mod} + \left(1 - \left[F(V)\right]^{\beta_G}\right) G^{ini}$$

avec G={$S_{wi}$, $S_{orw}$, $k_{rw}$, $k_{ro}$, $P_{cow}$}. et où $G^{mod}$ et $G^{ini}$ représentent les valeurs du paramètre G pour les valeurs de salinité initiale et modifiée et $\beta_G$ est un exposant, G étant en outre fonction de la saturation en eau lorsque G={$k_{rw}$, $k_{ro}$, $P_{cow}$}.

Plus précisément, selon cette mise en œuvre de l'invention, les valeurs des paramètres d'écoulement $S_{wi}(V)$ et $S_{orw}(V)$ pour une valeur de salinité intermédiaire peuvent être déterminées par une fonction d'interpolation du type :

$$G(V) = \left[F(V)\right]^{\beta_G} G^{mod} + \left(1 - \left[F(V)\right]^{\beta_G}\right) G^{ini} \qquad (1)$$

avec G(V) ={$S_{wi}(V)$, Sorw(V)}, et les valeurs des paramètres d'écoulement $k_{rw}(V,S)$, $k_{ro}(V,S)$ et $P_{cow}(V,S)$ pour une valeur de salinité intermédiaire peuvent être déterminées par une fonction d'interpolation du type :

$$G(S,V) = \left[F(V)\right]^{\beta_G} G^{mod}(\overline{S}) + \left(1 - \left[F(V)\right]^{\beta_G}\right) G^{ini}(\overline{S}) \qquad (2)$$

avec G(S,V)={krw(S,V), kro(S,V), Pcwo(S,V)}, $\overline{S}$ étant la saturation normée entre 0 et 1, la pression capillaire eau-huile étant définie comme la différence de pression entre les deux phases à une saturation donnée soit $Pc_{ow} = P_o - P_w = Pc_{ow}(S)$.

Selon cette mise en œuvre de l'invention, les constantes du modèle représentatif de l'évolution des paramètres d'écoulement en fonction de la salinité à calibrer sont, pour chaque paramètre d'écoulement, les constantes par rapport à la salinité $G^{mod}$ et $G^{ini}$ et l'exposant $\beta_G$.

Un tel modèle est par exemple implémenté dans le logiciel de simulation d'écoulement PumaFlow® (IFP Energies nouvelles, France). Selon une variante de mise en œuvre de l'invention, on utilise un modèle tel que décrit par les équations (1) et (2) ci-dessus, mais dans lequel les exposants $\beta_G$ sont égaux à 1. Un tel modèle est par exemple décrit dans le document (Jéraud et al., 2008). Un modèle utilisant des exposants $\beta_G$ différents de 1 permet toutefois un ajustement plus précis des mesures de laboratoire, et permet donc de déterminer un modèle plus fiable. Par ailleurs, un modèle permettant de représenter la salinité, non seulement par la concentration en sels mais également par la force ionique permet, dans certains cas, de mieux représenter le mécanisme physique qui contrôle les effets de la salinité.

Ainsi, le procédé selon l'invention comprend une phase de calibration des constantes du modèle représentatif de l'évolution des paramètres d'écoulement en fonction de la salinité, à partir de mesures réalisées en laboratoire sur un échantillon de roche du réservoir géologique étudié, puis une phase de simulations numériques réalisées à partir de ce modèle calibré et à l'échelle d'un échantillon de roche afin de déterminer la saturation résiduelle en huile microscopique pour différentes salinités. Puis au moyen de simulations numériques réalisées à l'échelle du réservoir, à partir de ce modèle calibré et des valeurs de saturation résiduelle en huile microscopique pour les différentes salinités , on détermine la salinité optimale d'une solution aqueuse à injecter dans le réservoir géologique étudié en vue de l'exploitation des hydrocarbures qu'il contient.

Le procédé selon l'invention comporte au moins les étapes ci-dessous :

**1- Mesures de production d'huile et de perte de charge pour une pluralité de salinités**

**2- Mesures de courbes de pression capillaire pour une pluralité de salinités**

**3- Calibration du modèle représentatif de l'évolution des paramètres d'écoulement en fonction de la salinité**

**4- Simulations numériques d'écoulement pour une pluralité de salinités avec/sans effets capillaires**

**5- Détermination de la saturation résiduelle en huile microscopique pour la pluralité de salinités**

**6- Exploitation des hydrocarbures de la formation**

Dans le cas où le modèle représentatif de l'évolution des paramètres d'écoulement en fonction de la salinité comprend un paramètre correspondant à la saturation irréductible en eau $S_{wi}$, on réalisera en outre une étape préalable 0 de mesures de la saturation irréductible en eau $S_{wi}$ pour une pluralité de salinités. Le procédé selon l'invention est décrit ci-après dans ce cas plus général, mais le procédé selon l'invention peut tout aussi bien être appliqué sans tenir compte de l'impact de la salinité sur la saturation irréductible en eau $S_{wi}$.

Par ailleurs le procédé selon l'invention est décrit ci-après dans le cas où le paramètre V représentatif de la salinité d'une solution correspond à la concentration Sal en sels présents dans la solution. Toutefois, le paramètre V représentatif de la salinité d'une solution peut tout aussi bien correspondre à la composition en ions présents dans la solution.

**0- Mesures de la saturation irréductible en eau pour une pluralité de salinités**

Au cours de cette étape, qui est optionnelle, on réalise des mesures de saturation irréductible en eau $S_{wi}$ pour une pluralité de valeurs de salinité, et au moins pour les valeurs de salinité initiale et modifiée.

Selon une mise en œuvre de l'invention, ces mesures sont réalisées sur un unique échantillon de roche représentatif du réservoir géologique étudié, restauré à son état initial tel que décrit ci-dessus entre chacune des injections à salinité différente. Alternativement, ces mesures sont réalisées sur un échantillon différent pour chaque salinité, les échantillons étant préalablement restaurés à leur état initial tel que décrit ci-dessus.

Selon une conception de l'invention, pour réaliser ces mesures, on sature en eau à salinité donnée l'échantillon sous vide de volume poreux VP, puis on déplace l'eau en place dans cet échantillon par de l'huile au moyen d'une pompe d'injection ou par centrifugation dans l'huile, et on mesure le volume d'eau produite $E_{prod}$ . On détermine alors, pour la valeur de salinité considérée, une valeur de saturation irréductible en eau Swi selon une formule du type

$$S_{wi} = \frac{VP - E_{prod}}{VP} \quad .$$

A l'issue de cette étape optionnelle, on obtient une valeur de saturation irréductible en eau $S_{wi}$ pour chaque valeur de salinité, et au moins pour les valeurs de salinité initiale et modifiée.

**1. Mesures de production d'huile et de perte de charge pour une pluralité de salinités**

Au cours de cette étape, on réalise des mesures en laboratoire de production d'huile et de perte de charge pour une pluralité de valeurs de salinité, mesures à partir desquelles on détermine des valeurs des paramètres G={$S_{orw}$, $k_{rw}$, $k_{ro}$} pour au moins les valeurs de salinité initiale et modifiée.

Au cours de cette étape, on injecte une pluralité de solutions aqueuses caractérisées par au moins deux valeurs de salinité différentes dans au moins un échantillon de roche provenant du réservoir géologique étudié, et on mesure l'évolution de la production d'huile en sortie de l'échantillon et la perte de charge (soit une différence de pression entre l'amont et l'aval de l'échantillon de roche considéré, mesurée par exemple au moyen d'un capteur de pression) pour chacune de ces valeurs de salinité.

Selon une mise en œuvre de l'invention, ces mesures sont réalisées sur un unique échantillon de roche représentatif du réservoir géologique étudié, restauré à son état initial tel que décrit ci-dessus entre chacune des injections à salinité différente. Alternativement, ces mesures sont réalisées sur un échantillon différent pour chaque salinité, les échantillons étant préalablement restaurés à leur état initial tel que décrit ci-dessus.

Selon une mise en œuvre de l'invention, on prépare au préalable une pluralité d'échantillons de solutions aqueuses, caractérisés par différentes salinités, et on débute la séquence d'injection par l'échantillon de solution aqueuse ayant la plus forte salinité, dite salinité initiale. Avantageusement, la première solution injectée selon cette séquence d'injection a une salinité se rapprochant de la saumure disponible à proximité du réservoir géologique étudié (eau de mer par exemple). Puis, on injecte successivement des solutions de salinités distinctes, obtenues soit par dilutions successives (concentration en sels divisée par 2, puis par 10, puis 20 puis 100 par exemple), soit par changement de la composition en certains ions (remplacement des ions divalents par des ions monovalents par exemple).

Selon une mise en œuvre de l'invention, on procède à l'injection de solutions aqueuses ayant deux valeurs de salinité distinctes, appelées comme décrit ci-dessus et de manière non limitative, valeur de salinité initiale et valeur de salinité modifiée, la salinité initiale étant la plus élevée des deux valeurs de salinité. Cette mise en œuvre de l'invention permet de calibrer des modèles représentatifs simples selon lesquels les paramètres d'écoulement varient linéairement en fonction de la salinité (cf. équations 1 et 2 décrites ci-dessus, dans lesquelles les exposants $\beta_G$ valent 1).

Selon une mise en œuvre préférée de l'invention, on procède à l'injection de solutions aqueuses ayant trois valeurs de salinité distinctes, appelées comme décrit ci-dessus et de manière non limitative, salinité initiale, salinité modifiée et salinité intermédiaire, la salinité intermédiaire étant comprise entre la salinité initiale et la salinité modifiée. Cette mise en œuvre de l'invention permet de calibrer des modèles représentatifs plus précis selon lesquels les paramètres d'écoulement ne varient pas uniquement linéairement en fonction de la salinité (cf. équations 1 et 2 décrites ci-dessus, dans lesquelles les exposants $\beta_G$ peuvent être différents de 1).

Avantageusement, le nombre d'injections à salinités différentes vaut préférentiellement 5. En effet, un tel nombre d'injections permet de déterminer des modèles représentatifs de l'évolution des paramètres d'écoulement en fonction de la salinité de manière encore plus réaliste que pour le mode de réalisation précédemment décrit.

Selon l'invention, on détermine ensuite, à partir de ces mesures, les valeurs des paramètres d'écoulement G={Sorw, $k_{rw}$, $k_{ro}$} tels que définis par les équations (1) et (2) ci-dessus pour au moins la valeur de salinité modifiée et la valeur de salinité initiale.

Selon une mise en œuvre de l'invention, on détermine une valeur de la saturation résiduelle en huile apparente moyenne, notée $S_{orw}^{carotte}$, pour une valeur de salinité donnée à partir de la mesure de la production totale d'huile récupérée en sortie de carotte pour cette salinité selon une formule du type :

$$S_{orw}^{carotte} = \frac{H_{ini} - H_{prod}}{VP} \quad (3)$$

où $H_{ini}$ désigne le volume d'huile initialement en place dans la carotte (volume mesuré lors de la saturation de l'échantillon à l'étape 1 : $H_{ini} = (1 - S_{ini})VP$), et $H_{prod}$ désigne le volume d'huile récupéré (produit) en sortie de carotte, et VP le volume des pores de la carotte.

Selon une mise en œuvre de l'invention, on détermine les perméabilités à l'huile et à l'eau $k_{rw}$ et $k_{ro}$ pour une

valeur de salinité en utilisant une représentation des perméabilités relatives selon des fonctions puissances de la saturation normée. Plus précisément, pour une phase p donnée (p = 'w' (pour l'eau) (w) ou 'o' (pour l'huile)), on définit la perméabilité relative $k_{rp}$ selon une formule du type $kr_p(S) = kr_{p\max}(\overline{S})^{\alpha_p}$ où $\alpha_p$ est un exposant pour la phase p,

$$\overline{S} = \frac{S_w - S_{wi}}{1 - S_{wi} - S_{orw}}$$

est la saturation normée, et $kr_{p\max}$ est une constante pour la phase p. Selon cette mise en œuvre de l'invention , on peut déterminer les constantes $kr_{p\max}$ et $\alpha_p$ (p=w, o) de la manière suivante :

- on détermine la perméabilité relative à l'huile maximale à la saturation irréductible en eau et la perméabilité relative maximale à l'eau mesurée à la fin de l'injection d'eau à partir des mesures de différence de la pression entre l'amont et l'aval de l'échantillon (c'est-à-dire la perte de charge) pour une salinité donnée, et par application de la loi de Darcy généralisée, soit selon une formule du type :

$$kr_{w\max}(Sal) = kr_w(S_w = 1 - S_{orw}(Sal)) = \frac{\mu_w Q_w L}{AK\Delta P_w(Sal)}$$

$$kr_{o\max}(Sal) = kr_o(S_o = 1 - S_{wi}(Sal)) = \frac{\mu_o Q_o L}{AK\Delta P_o(Sal)}$$

où $L$, $A$, $K$, $Q_w$, $Q_o$, $\Delta P_w(Sal)$, $\Delta P_o(Sal)$ désignent respectivement la longueur de la carotte, sa section, sa perméabilité monophasique, le débit d'injection d'eau, le débit d'injection d'huile, la différence de pression entre l'entrée et la sortie de la carotte à la fin de l'injection d'eau à salinité $Sal$ donnée, et la différence de pression entre l'entrée et la sortie de la carotte à la fin de la mise en place de l'huile (phase initiale de saturation en huile et eau irréductible décrite au début de cette étape 1). $kr_{w\max}(Sal)$ est ainsi déduit de la mesure $\Delta P_w(Sal)$ à la fin de chaque étape d'injection à salinité donnée et en particulier des deux étapes d'injection à salinité initiale et modifiée, alors que $kr_{o\max}(Sal)$ est déduit des mesures de $\Delta P_o(Sal)$ à la fin de la mise en place d'huile et d'eau irréductible aux salinités initiale ($Sal_{ini}$) et modifiée ($Sal_{mod}$).

- l'exposant $\alpha_p$ de la loi puissance donnée plus haut (i.e. $kr_p(S) = kr_{p\max}(\overline{S})^{\alpha_p}$) modélise la forme des courbes, c'est-à-dire leur évolution de 0 à $kr_{w\max}$ ou $kr_{o\max}$ en fonction de la saturation à une salinité donnée. Selon une mise en œuvre de l'invention, $\alpha_p$ peut être estimé à partir de courbes relatives au réservoir géologique étudié déjà existantes, relatives au réservoir géologique étudié ou bien provenant d'un analogue géologique. Selon une mise en œuvre de l'invention, si de telles courbes ne sont pas disponibles, l'exposant $\alpha_p$ peut être calibré à partir de l'ajustement par simulation numérique des mesures réalisées à l'étape 1 (c'est-à-dire des mesures de production d'huile et de pertes de charges) de la première injection d'eau à salinité initiale qui amène l'échantillon de la saturation en eau $S_{wi}$ à la saturation en eau maximale pour cette même salinité soit $S_w = 1 - S_{orw}(Sal_{ini})$. Une telle simulation peut être réalisée au moyen du simulateur d'écoulement diphasique utilisé à l'étape 4 décrite ci-dessous, ou bien de tout autre simulateur d'écoulement diphasique classique ne tenant pas compte de la salinité.

Le tableau 1 donne, à titre illustratif, l'évolution des saturations résiduelles en huile (en pourcentage du volume des pores, % VP), notées $S_{orw}^{carotte}$ par la suite, constatée à l'échelle d'une carotte au terme de 5 injections successives d'une eau de mer progressivement diluée, les valeurs de salinité différentes résultant de concentrations en sels Sal (en ppm) différentes. Ces résultats, extraits du document (Yousef et al., 2011), sont issus de mesures de récupération d'huile sur une carotte composite de 16.2 cm de longueur représentative d'un réservoir carbonaté, la saturation initiale en huile étant de 89.6 % VP (saturation irréductible en saumure égale à 10.4 % VP). Environ 10 volumes de pores de saumure ont été injectés à chacune des 5 étapes d'injection à salinité donnée, à un débit de 1 cm3/mn, augmenté à 2 puis 4 cm3/min en fin d'étape. On observe que la saturation résiduelle en huile $S_{orw}^{carotte}$ déduite des mesures de production d'huile en sortie de carotte décroît en fonction de la salinité de l'eau d'injection mais demeure constante pour des coefficients de dilution égaux ou supérieurs à 20. Il apparait donc inutile de modéliser les impacts de la salinité pour des valeurs de salinité inférieures à 2883 ppm. Ainsi, pour cet exemple de mise en œuvre, on considère $Sal_{ini}$=57670 et $Sal_{mod}$=2883.

Tableau 1

| Sal (ppm) | $S_{orw}^{carotte}$ (% VP) |
|-----------|------------|
| **57670** | 29.5 |
| 28835 | 23.3 |
| 5767 | 15.1 |
| **2883** | 13.5 |
| 577 | 13.5 |

2. **Mesures de courbes de pression capillaire pour une pluralité de salinités**

Au cours de cette étape, on mesure des courbes de pressions capillaires relatives à l'eau et à l'huile pour une pluralité de valeurs de salinité, et au moins pour les valeurs de salinité initiale et modifiée, mesures à partir desquelles on détermine des valeurs des paramètres d'écoulement $P_{cow}$ pour au moins les valeurs de salinité initiale et modifiée.

Selon une mise en œuvre de l'invention, ces mesures sont réalisées sur un unique échantillon de roche représentatif du réservoir géologique étudié, qui doit alors être restauré à son état initial tel que décrit ci-dessus entre chacune des injections à salinité différente. Alternativement, les mesures de pression capillaire sont réalisées sur un échantillon différent pour chaque salinité, les échantillons devant être préalablement restaurés à leur état initial tel que décrit ci-dessus.

Selon une mise en œuvre de l'invention, pour une salinité donnée Sal, on réalise des mesures de la pression capillaire pour différentes valeurs de la saturation réparties sur un intervalle de saturation [$S_{wi}$(Sal), 1-$S_{orw}$(Sal)] selon les deux étapes suivantes :

- On réalise une imbibition spontanée de l'échantillon saturé d'huile et d'eau irréductible dans l'eau de saturation considérée, pour la valeur de salinité considérée. Plus précisément, l'échantillon saturé est immergé dans l'eau et on mesure la production d'huile en fonction du temps pour cette valeur de salinité. On simule de manière numérique cette imbibition, au moyen d'un simulateur d'écoulement tel que le logiciel PUMAFLOW®, et on ajuste les pressions capillaires $Pc_{ow} = P_o - P_w = Pc_{ow}$ (S) pour les valeurs de S couvrant l'intervalle de variation de saturation.
- On réalise une imbibition forcée, en soumettant l'échantillon à la fin de l'étape d'imbibition spontanée dans une centrifugeuse : cette centrifugation permet, par mesure de l'huile expulsée pour une vitesse de centrifugation donnée, de déterminer la saturation de l'échantillon pour la valeur de pression capillaire imposée par cette vitesse de rotation de la centrifugeuse. On mesure ainsi un point de la courbe de pression capillaire $Pc_{ow}$ (Sw), pour la saturation S fixée telle que $S_w > S_w(Pc_{ow} = 0)$, sachant que $Sw(Pcow = 0)$ est la valeur maximale de saturation en eau obtenue par l'imbibition spontanée. En réitérant la mesure pour diverses valeurs croissantes de la vitesse de rotation de la centrifugeuse, on obtient autant de mesures permettant d'échantillonner la partie négative de la courbe $Pc_{ow}$ (Sw) et notamment l'intervalle de saturation [$S_w(Pc_{ow} = 0)$, 1-$S_{orw}$(Sal)].

On obtient, à l'issue de ces deux étapes appliquées pour chacune des valeurs de salinité, dont au moins des valeurs de salinité initiale et modifiée, une courbe de pression capillaire en fonction de la saturation.

Selon une mise en œuvre de l'invention, lorsque les courbes de pression capillaire n'ont été mesurées que pour les valeurs de salinité initiale et modifiée, on peut interpoler les courbes de pression capillaire ainsi mesurées pour déterminer des courbes de pression capillaire pour les autres valeurs de salinité de la pluralité de valeurs de salinité.

3- **Calibration du modèle représentatif de l'évolution des paramètres d'écoulement en fonction de la salinité**

Au cours de cette étape, il s'agit de calibrer, à partir des mesures réalisées aux étapes 1 et 2, le modèle représentatif de l'évolution des paramètres d'écoulement en fonction de la salinité d'une solution aqueuse injectée dans le réservoir géologique étudié, tel que le modèle décrit ci-dessus par les équations (1) et (2).

Selon une mise en œuvre de l'invention selon laquelle le simulateur d'écoulement utilisé repose sur une description des paramètres d'écoulement définis selon les équations (1) et (2) avec des exposants $\beta_G$=1, et G= {$S_{wi}$, Sorw, $k_{rw}$, $k_{ro}$, $P_{cow}$}, on attribue aux termes $G^{mod}$ et $G^{ini}$ définis dans ces équations (1) et (2) les valeurs mesurées respectivement aux valeurs de salinité modifiée et initiale lors des étapes 0 et 1 pour chacun de ces paramètres G= {$S_{wi}$, $S_{orw}$, $k_{rw}$, $k_{ro}$, $P_{cow}$}. Ce mode de mise en œuvre de l'invention requiert ainsi que les mesures de l'étape 1 décrites ci-dessus comprennent au moins des injections de solutions aqueuses à salinités initiale et modifiée.

Selon un mode de mise en œuvre de l'invention selon lequel le simulateur d'écoulement utilisé repose sur une description des paramètres d'écoulement définis selon les équations (1) et (2) avec des exposants $\beta_G$ différents de 1, avec G= {$S_{wi}$, Sorw, $k_{rw}$, $k_{ro}$, $P_{cow}$}, on attribue aux termes $G^{mod}$ et $G^{ini}$ définis dans ces équations (1) et (2) les valeurs mesurées respectivement aux valeurs de salinité modifiée et initiale lors des étapes 0 et 1 pour chacun de ces paramètres G= {$S_{wi}$, Sorw, $k_{rw}$, $k_{ro}$, $P_{cow}$}. En outre, on peut déterminer une valeur de l'exposant $\beta_G$, avec G= {$S_{wi}$, Sorw, $k_{rw}$, $k_{ro}$, $P_{cow}$}, à partir des valeurs mesurées aux valeurs de salinité initiale, modifiée et intermédiaire lors de l'étape 1 pour chacun de ces paramètres. Ce mode de mise en œuvre de l'invention requiert ainsi que les mesures des étapes 0 et 1 décrites ci-dessus comprennent au moins des injections de solutions aqueuses à salinités initiale, modifiée et intermédiaire(s).

Selon une première variante de l'invention, on peut déterminer à cette étape l'exposant $\beta_G$ relatif à la saturation résiduelle en huile selon une formule suivante :

$$\beta_{Sorw} = \frac{Ln\left[\dfrac{S_{orw}^{carotte}(Sal) - S_{orw}^{carotte}(Sal_{ini})}{S_{orw}^{carotte}(Sal_{mod}) - S_{orw}^{carotte}(Sal_{ini})}\right]}{Ln\left[\dfrac{Sal_{ini} - Sal}{Sal_{ini} - Sal_{mod}}\right]} \qquad (3)$$

Selon une deuxième variante de l'invention, mise en œuvre avantageusement lorsque les effets capillaires sont très importants, on attribue dans un premier temps à l'étape 3, la valeur de 1 à l'exposant $\beta_G$ relatif à la saturation résiduelle en huile, et on détermine une valeur de l'exposant $\beta_G$ relatif à la saturation résiduelle en huile à l'étape 5, tel que décrit ci-après.

Selon une mise en œuvre de l'invention, on peut déterminer l'exposant $\beta_{kro}$ selon une formule analogue à celle de l'équation (3) où la mesure $S_{orw}^{carotte}$ est remplacée par $k_{rwmax}$ (tel que déduite de la mesure de $\Delta P_w$ à la salinité considérée), soit selon une formule du type :

$$\beta_{krw} = \frac{Ln\left[\dfrac{k_{rw\,max}(Sal) - k_{rw\,max}(Sal_{ini})}{k_{rw\,max}(Sal_{mod}) - k_{rw\,max}(Sal_{ini})}\right]}{Ln\left[\dfrac{Sal_{ini} - Sal}{Sal_{ini} - Sal_{mod}}\right]} \qquad (4)$$

Selon une mise en œuvre de l'invention, on attribue la valeur de 1 aux paramètres $\beta_{kro}$, $\beta_{Pcow}$ et $P_{Swi}$. En effet, le choix des valeurs des exposants $\beta_{kro}$, $\beta_{Pcow}$ et $\beta_{Swi}$ n'a pas d'incidence sur la modélisation en fonction de la salinité de l'état final de saturation en huile quantifié par $S_{orw}$ (on rappelle que $S_{orw}$ est déduit de la mesure de récupération d'huile en sortie de carotte à la fin de l'étape d'injection à la salinité considérée), ainsi que sur la modélisation de la différence de pression entre l'amont et l'aval de la carotte à la fin de l'étape d'injection à la salinité considérée). Alternativement, le choix des valeurs des exposants $P_{kro}$, $\beta_{Pcow}$ et $\beta_{Swi}$ peut de manière facultative faire l'objet d'ajustements ultérieurs par des simulations cherchant à reproduire les mesures "transitoires" acquises avant les mesures stationnaires obtenues en fin d'étape d'injection à une salinité donnée.

Avantageusement, si on dispose de courbes de pression capillaire pour des salinités intermédiaires entre la salinité initiale et la salinité modifiée (obtenues par mesures ou bien par interpolation tel que décrit à l'étape 2 ci-dessus), on peut déterminer des valeurs de $\beta_{Pcow}$ selon une formule du type :

$$\beta_{Pcow} = \frac{Ln\left[\dfrac{Pc_{ow}(Sal) - Pc_{ow}(Sal_{ini})}{Pc_{ow}(Sal_{mod}) - Pc_{ow}(Sal_{ini})}\right]}{Ln\left[\dfrac{Sal_{ini} - Sal}{Sal_{ini} - Sal_{mod}}\right]} \qquad (5).$$

Selon une mise en œuvre de l'invention, différentes valeurs de $\beta_{Pcow}$ peuvent être déterminées au moyen des mesures de $P_{cow}$ acquises pour différentes valeurs de saturation, à partir desquelles on peut définir une valeur moyenne représentative.

Ainsi, à l'issue de cette étape, on obtient un modèle représentatif de l'évolution des paramètres d'écoulement en fonction de la salinité tel que décrit pas les équations (1) et (2) ci-dessus calibré par :

- Dans le cas des paramètres d'écoulement G= {$S_{wi}$, Sorw, $k_{rw}$, $k_{ro}$}, les valeurs des constantes $G^{mod}$ et $G^{ini}$ à partir des mesures décrites aux étapes 0 et 1, et de manière préférentielle, lorsque des mesures ont été réalisées pour au moins trois valeurs de salinité, par les valeurs des exposants $\beta_{Sorw}$ et $\beta_{krw}$ déterminées tel que décrit ci-dessus. Avantageusement, le modèle est également paramétré par des exposants $\beta_G$ différents de 1 pour G= {$S_{wi}$, $k_{ro}$}, et déterminés tels que décrit ci-dessus ;

- Dans le cas du paramètre d'écoulement G=$P_{cow}$, les valeurs des constantes $G^{mod}$ et $G^{ini}$ déterminées à partir des mesures décrites à l'étape 2 ci-dessus, et le cas échéant, lorsque des mesures ont été réalisées pour au moins trois valeurs de salinité, par la valeur de l'exposant $\beta_{Pcow}$.

**4- Simulations numériques d'écoulement pour une pluralité de salinités avec/sans effets capillaires**

Au cours de cette étape, on réalise, au moyen du simulateur d'écoulement incorporant le modèle calibré tel que décrit ci-dessus, des simulations numériques simulant des injections de solutions aqueuses à différentes salinités dans un échantillon de roche, avec et sans effets capillaires, et ce pour au moins les valeurs de salinité initiale et modifiée. Ainsi, les simulations de cette étape sont réalisées à l'échelle de l'échantillon de roche.

Plus précisément, on réalise, pour chacune des valeurs de salinité, et au moins pour les valeurs de salinité initiale et modifiée :

- **une première simulation numérique** dans laquelle on annule les effets capillaires (c'est-à-dire avec Pcow= 0) pour la salinité considérée : cette première simulation fournit une première valeur notée $S_{orw}^{SIM}$ de la saturation en huile moyenne de la carotte à la fin la valeur de salinité considérée. Il est à noter que cette première valeur simulée de la saturation moyenne en huile de fin d'étape coïncide avec la saturation en huile $S_{orw}^{carotte}$ mesurée à l'échelle de la carotte à partir des données de production d'huile (et appelée saturation résiduelle apparente expérimentale par la suite) pour les valeurs de salinité pour lesquelles des mesures ont été effectuées à l'étape 1, puisque le modèle est calibré à partir de ces mesures, soit $S_{orw}^{SIM} = S_{orw}^{carotte}$. Elle est également équivalente à une saturation résiduelle (microscopique) simulée car la capillarité a été ignorée lors de cette simulation, mais elle diffère de la saturation résiduelle (microscopique expérimentale) recherchée.

- **une deuxième simulation numérique,** dans laquelle on tient compte des effets capillaires (c'est-à-dire que le modèle tient compte de l'évolution de $P_{cow}$ en fonction de la salinité telle que déterminée à l'issue des étapes 2 et 3 ci-dessus), et qui fournit une deuxième valeur, notée $S_{orw}^{carotte-SIM}$, de la saturation en huile moyenne de la carotte à la fin de chaque étape d'injection pour une valeur de salinité donnée. Cette deuxième valeur de la saturation moyenne en huile simulée (à la salinité considérée) ne correspond plus à une saturation en huile résiduelle (microscopique) et sa valeur diffère de la saturation résiduelle apparente mesurée (à l'échelle de la carotte) en raison des effets capillaires plus ou moins marqués pris en compte dans la simulation. C'est pourquoi on la qualifie également de saturation résiduelle apparente simulée.

Avantageusement, on réalise les deux simulations numériques décrites ci-dessus pour une pluralité de valeurs de salinité différentes, en plus des valeurs des deux valeurs de salinité initiales et modifiées. En effet, le modèle étant calibré, il permet de prédire les véritables valeurs de saturation résiduelle (microscopique) pour différentes valeurs de salinité, et notamment des valeurs de salinité intermédiaire.

**5- Détermination de la saturation résiduelle en huile microscopique pour la pluralité de salinités**

Au cours de cette étape, on détermine, pour chacune des valeurs de salinité pour lesquelles une simulation a été réalisée à l'étape 4 ci-dessus, les valeurs de saturation résiduelle en huile microscopique, notées $S_{orw}$, à partir des valeurs simulées de la saturation moyenne en huile $S_{orw}^{carotte-SIM}$ (saturation résiduelle apparente simulée) obtenues en tenant compte des effets capillaires et des valeurs simulées de la saturation moyenne en huile $S_{orw}^{SIM}$ (égales aux valeurs $S_{orw}^{carotte}$ de la saturation résiduelle apparente expérimentale) obtenues sans tenir compte des effets capillaires selon une formule du type :

$$S_{orw} = \frac{\left(2 S_{orw}^{SIM} - S_{orw}^{carotte-SIM}\right)\left(1 - S_{wi}\right) - \left(S_{orw}^{SIM}\right)^2}{\left(1 - S_{wi} - S_{orw}^{carotte-SIM}\right)},$$

formule dans laquelle les saturations sont données entre 0 et 1. En effet, la variation de saturation résiduelle en huile simulée en intégrant les pressions capillaires mesurées à l'étape 2, normée sur l'intervalle de variation de la saturation en huile simulé [ $S_{orw}^{SIM} (= S_{orw}^{carotte})$, 1- $S_{wi}$] est la même que la variation de saturation résiduelle en huile mesurée, normée sur le véritable intervalle de variation de la saturation en huile [$S_{orw}$,1-$S_{wi}$].

Selon une deuxième variante de l'invention, on détermine la valeur de l'exposant $\beta_{Srow}$ intervenant dans l'équation (1) décrite ci-dessus pour G=$S_{orw}$ au cours de la présente étape (et non à l'étape 3), en particulier si les effets capillaires sont supposés jouer un rôle important. Selon cette variante, on réalise l'étape 4 avec $\beta_{Sorw}$=1, et on détermine $\beta_{Sorw}$ au moyen des valeurs de Sorw déterminées à la présente étape soit :

$$\beta_{Sorw} = \frac{Ln\left[\dfrac{S_{orw}(Sal) - S_{orw}(Sal_{ini})}{S_{orw}(Sal_{mod}) - S_{orw}(Sal_{ini})}\right]}{Ln\left[\dfrac{Sal_{ini} - Sal}{Sal_{ini} - Sal_{mod}}\right]}$$

## 6- Exploitation des hydrocarbures de la formation

Au cours de cette étape, il s'agit de déterminer au moins un schéma d'exploitation des hydrocarbures contenus dans la formation, à partir des saturations résiduelles en huile microscopiques déterminées pour au moins deux valeurs de salinité tel que décrit ci-dessus, et au moyen d'un simulateur d'écoulement incorporant le modèle calibré tel que décrit ci-dessus. Dans le cas de cette étape, le simulateur d'écoulement est utilisé à l'échelle du réservoir, c'est-à-dire qu'il est utilisé pour simuler des écoulements dans le réservoir géologique étudié (et non pas dans un échantillon de roche tel que décrit à l'étape 4).

De manière générale, un schéma d'exploitation comprend un nombre, une géométrie et une implantation (position et espacement) des puits injecteurs et producteurs. Mais un schéma d'exploitation des hydrocarbures comprend également la définition d'un type de récupération (injection d'eau, de gaz, de polymères etc). Dans le cas de la présente invention qui concerne une récupération assistée des hydrocarbures par injection d'une solution aqueuse saline, la sélection d'un schéma d'exploitation comprend la sélection d'une salinité de la solution aqueuse à injecter, qui peut être elle-même définie par une concentration en sels et/ou une composition ionique.

De manière classique, on évalue différents schémas d'exploitation d'un réservoir géologique au moyen d'un simulateur d'écoulement et on sélectionne un schéma satisfaisant au moins un critère prédéfini. Un schéma d'exploitation d'un réservoir d'hydrocarbures optimal peut par exemple permettre un fort taux de récupération des hydrocarbures piégés dans le réservoir géologique, sur une longue durée d'exploitation, et nécessitant un nombre de puits limité.

Le simulateur d'écoulement selon l'invention, calibré tel que décrit ci-dessus et tenant compte des valeurs de saturation résiduelle en huile microscopiques déterminées tel que décrit ci-dessus, permet de modéliser l'impact de la salinité sur la récupération de l'huile en place dans un réservoir géologique.

Un tel simulateur d'écoulement est de manière classique un logiciel mise en œuvre par ordinateur. Un exemple de simulateur d'écoulement (aussi appelé simulateur de réservoir) permettant la prise en compte de l'impact de la salinité sur les écoulements est le logiciel PumaFlow® (IFP Energies nouvelles, France). Selon l'invention, à tout instant t de la simulation, le simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré.

Le simulateur d'écoulement selon l'invention intègre notamment les valeurs des salinités initiale et modifiée, et pour chacune de ces deux valeurs de salinité, au moins des valeurs des paramètres d'écoulement G= {Swi, Sorw, krw, kro, Pcow} pour ces deux valeurs de salinité, ainsi que les valeurs des exposants $\beta_G$ déterminées le cas échéant, et qui par défaut sont égaux à 1.

Selon un mode de mise en œuvre de l'invention, on définit différents schémas d'exploitation des hydrocarbures de la formation étudiée comprenant notamment des injections de solutions aqueuses à différentes salinités, et on simule les écoulements dans le réservoir géologique étudié pour au moins ces différentes salinités. On définit au moins un critère, tel que la quantité d'hydrocarbures produit selon chacun des différents schémas d'exploitation, la courbe représentative de l'évolution de la production dans le temps au niveau de chacun des puits etc. Le schéma d'exploitation finalement sélectionné peut alors correspondre à celui satisfaisant au moins un des critères d'évaluation des différents schémas d'exploitation.

Puis, une fois le schéma d'exploitation sélectionné, les hydrocarbures piégés dans la formation sont exploités en fonction de ce schéma d'exploitation, notamment en injectant la solution aqueuse ayant la salinité telle que sélectionnée ci-dessus, en forant les puits injecteurs et producteurs du schéma d'exploitation ainsi déterminés, de manière à produire les hydrocarbures, et en installant les infrastructures de production nécessaires au développement du gisement.

Il est bien entendu que le schéma d'exploitation peut être évolutif sur la durée d'une exploitation d'un réservoir géologique, en fonction des connaissances relatives au réservoir acquises pendant l'exploitation, des améliorations dans les différents domaines techniques intervenant lors d'une exploitation d'un gisement d'hydrocarbures (améliorations dans le domaine du forage, de la récupération assistée par exemple).

**Equipement et produit programme d'ordinateur**

Il est bien clair que le procédé selon l'invention comprend des étapes mises en œuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

En particulier, les moyens de traitement de données sont configurés pour mettre en œuvre les étapes 4 et 6 décrites ci-dessus, ces étapes nécessitant la mise en œuvre d'un simulateur numérique d'écoulement.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit précédemment, lorsque ledit programme est exécuté sur un ordinateur.

**Exemple de réalisation**

Les caractéristiques et avantages du procédé selon l'invention apparaîtront plus clairement à la lecture de l'exemple d'application ci-après.

Pour cet exemple d'application, on applique le procédé selon l'invention à une modélisation des essais d'injection d'eau de mer progressivement diluée dont les résultats sont donnés dans le Tableau 1, et tels que décrits dans le document (Youssef et al. 2011).

On mesure en outre des courbes de pression capillaire, dans ce cas d'application pour les valeurs de salinité initiales et modifiées uniquement. La Figure 1 présente des exemples de courbes de pression capillaire, à salinité initiale (représentée par des losanges) et à salinité modifiée (représentée par des carrés), en fonction de la saturation Sw (en %VP).

On détermine les valeurs des exposants $\beta_{Sorw}$ pour chacune des salinités intermédiaires de la manière décrite à l'étape 3 ci-dessus. Les exposants ainsi déterminés sont égaux respectivement à 1.48 et à 1.95. Une valeur de $\beta_{Sorw}$ fournie en entrée du simulateur, comprise entre 1.5 et 2 doit donc permettre de prédire correctement les valeurs expérimentales $S_{orw}^{carotte}$ de $S_{orw}$. A titre d'illustration, nous donnons dans le tableau 2 les valeurs simulées numériquement en négligeant la pression capillaire (première simulation numérique de l'étape 4) pour $\beta_{Sorw}$ égal soit à 1, soit à 2. On constate que les prévisions du modèle sont globalement meilleures avec $\beta_{Sorw}$ = 2 qu'avec $\beta_{Sorw}$ = 1. Plus précisément :

- pour la salinité 5767 ppm, avec l'exposant $\beta_{Sorw}$ = 2, le modèle prédit quasi-exactement la saturation résiduelle en huile mesurée comme attendu (car la valeur précalculée de $\beta_{Sorw}$, 1.95, est très proche de 2),

- pour la salinité 28835 ppm, les valeurs de saturation résiduelle prédites par le modèle avec $\beta_{Sorw}$ = 2 et $\beta_{Sorw}$ = 1

encadrent la saturation résiduelle en huile mesurée comme attendu également (car la valeur 1.48 pré-calculée de $\beta_{Sorw}$ est intermédiaire entre 1 et 2).

**Tableau 2**

| Sal (ppm) | Sorw expérimental, (% PV) | Sorw Simulé avec $_{Sorw}$ = 1, (% PV) | Sorw Simulé avec $_{Sorw}$ = 2, (% PV) |
|---|---|---|---|
| 28835 | 23.3 | 21.22 | 25.21 |
| 5767 | 15.1 | 14.34 | 15.14 |

On illustre par la suite les étapes 3 à 5 du procédé selon l'invention sur la valeur de salinité initiale uniquement.

On calibre le modèle représentatif de l'évolution des paramètres d'écoulement en fonction de la salinité tel que décrit à l'étape 3, selon toutefois la deuxième variante décrite dans cette étape (ou autrement dit on attribue une valeur de 1 à l'exposant $\beta_{Sorw}$).

On réalise ensuite une simulation numérique l'injection d'eau à salinité initiale en tenant compte cette fois de la pression capillaire.

Comme attendu, la saturation résiduelle apparente simulée à l'échelle de la carotte $S_{orw}^{carotte-SIM}$ n'est plus égale à 29.5 % VP mais à 32.6 % VP en raison de la rétention capillaire d'huile au sein de la carotte.

La véritable saturation résiduelle microscopique est alors calculée à partir des valeurs $S_{orw}^{carotte} = 29.5\ \%\ \text{VP}$, $S_{orw}^{carotte-SIM} = 32.6\ \%\ \text{VP}$ et $S_{wi}$ = 10.4 % VP selon la formule de correction spécifiée à l'étape 5, soit :

$$S_{orw} = \frac{(2*0.295 - 0.326)(1 - 0.104) - (0.295)^2}{(1 - 0.104 - 0.326)} = 0.262\ (= 26.2\ \%\ \text{VP}).$$

On constate donc qu'en adoptant la saturation résiduelle apparente mesurée à partir des données de production en sortie de carotte, l'erreur effectuée sur la véritable saturation résiduelle en huile excède 3 % PV (29.5 - 26.2 = 3.3 % VP), ce qui est considérable en termes de prévision d'efficacité de récupération. Cet écart résulte de la rétention d'huile à l'intérieur de la carotte (égale à 32.6 - 29.5 = 3.1 % du volume des pores).

Il est important de réaliser ces corrections des mesures de saturation résiduelle en huile car l'usage courant de carottes de faible longueur accroît l'importance relative de l'huile retenue par capillarité en sortie de carottes non mouillables à l'eau. Ceci justifie ainsi la nécessité d'intégrer les étapes 2 à 5 dans l'évaluation et l'optimisation de la salinité d'une eau d'injection.

Les valeurs de saturation résiduelle en huile fiables ainsi prédites pour différentes salinités permettent de déterminer une salinité d'injection permettant une exploitation optimale des hydrocarbures présents dans un réservoir géologique, c'est-à-dire par exemple une valeur de salinité conduisant à une saturation résiduelle en huile faible, tout en étant associée à des coûts de dessalement acceptable.

**Revendications**

**1.** Procédé pour la récupération des hydrocarbures présents dans un réservoir géologique par injection d'une solution aqueuse saline dans ledit réservoir, au moyen d'un simulateur numérique d'écoulement incorporant un modèle représentatif de l'évolution de paramètres d'écoulement en fonction de la salinité de ladite solution aqueuse injectée, lesdits paramètres d'écoulement comprenant au moins une saturation résiduelle en huile, une perméabilité relative en eau, une perméabilité relative en huile, et une pression capillaire, ledit modèle étant fonction de constantes relatives à chacun desdits paramètres, **caractérisé en ce que** :

A- à partir d'au moins un échantillon représentatif dudit réservoir, ledit échantillon ayant été restauré dans son état initial, on calibre ledit modèle selon au moins les étapes suivantes :

i. on injecte dans ledit échantillon au moins deux solutions aqueuses ayant des valeurs de salinité différentes et on mesure au moins une production d'huile et une perte de charge pour chacune desdites valeurs de salinité ;

ii. on réalise des mesures de pression capillaire pour au moins chacune desdites valeurs de salinité ;
iii. à partir desdites mesures, on détermine lesdites constantes dudit modèle relatives à chacun desdits paramètres ;

B- et **en ce que**, au moyen dudit simulateur incorporant ledit modèle calibré, on détermine une valeur de saturation résiduelle en huile microscopique pour au moins lesdites valeurs de salinité en appliquant au moins les étapes suivantes pour chacune desdites valeurs de salinité :

iv. on réalise une première simulation d'une injection d'une solution aqueuse pour ladite valeur de salinité dans ledit échantillon, ledit modèle étant appliqué pour ladite première simulation avec une pression capillaire nulle, et on détermine une première valeur de ladite saturation résiduelle en huile pour ladite valeur de salinité ;
v. on réalise une deuxième simulation d'une injection d'une solution aqueuse pour ladite valeur de salinité dans ledit échantillon, et on détermine une deuxième valeur de ladite saturation résiduelle en huile pour ladite valeur de salinité ;
vi. au moins à partir desdites première et deuxième valeurs de saturation résiduelle en huile simulées pour ladite valeur de salinité, on détermine ladite valeur de ladite saturation résiduelle en huile microscopique pour ladite valeur de salinité;

D- et **en ce que**, à partir dudit simulateur d'écoulement incorporant ledit modèle calibré et desdites valeurs de saturation résiduelle microscopique en huile déterminées pour au moins lesdites valeurs de salinité, on détermine un schéma d'exploitation dudit réservoir et on exploite lesdits hydrocarbures dudit réservoir selon ledit schéma d'exploitation.

2. Procédé selon la revendication 1, dans lequel ledit modèle s'exprime selon une formule du type :

$$G(V) = \left[ F(V) \right]^{\beta_G} G^{\mathrm{mod}} + \left( 1 - \left[ F(V) \right]^{\beta_G} \right) G^{ini}$$

où G est un desdits paramètres d'écoulement dudit modèle, V est ladite salinité, et où $G^{\mathrm{mod}}$, $G^{ini}$ et $\beta_G$ sont lesdites constantes dudit modèle à calibrer pour ledit paramètre, et dans lequel G est en outre fonction d'une saturation en eau lorsque G correspond à ladite perméabilité relative à l'eau, ladite perméabilité relative à l'huile ou ladite pression capillaire.

3. Procédé selon l'une des revendications précédentes, dans lequel ladite valeur de saturation résiduelle en huile microscopique $S_{orw}$ pour une desdites valeurs de salinité est déterminée selon une formule du type :

$$S_{orw} = \frac{\left( 2 S_{orw}^{SIM} - S_{orw}^{carotte-SIM} \right) \left( 1 - S_{wi} \right) - \left( S_{orw}^{SIM} \right)^2}{\left( 1 - S_{wi} - S_{orw}^{carotte-SIM} \right)},$$

où $S_{orw}^{SIM}$ est ladite première valeur de saturation en huile résiduelle simulée pour ladite valeur de salinité, $S_{orw}^{carotte-SIM}$ est ladite deuxième valeur de saturation en huile résiduelle simulée pour ladite valeur de salinité, et $S_{wi}$ est une saturation en eau irréductible.

4. Procédé selon l'une des revendications précédentes, dans lequel lesdits paramètres d'écoulement comprennent en outre une saturation irréductible en eau, et dans lequel on réalise en outre une mesure de saturation irréductible en eau pour au moins chacune desdites valeurs de salinité à partir dudit échantillon.

5. Procédé selon l'une des revendications précédentes, dans lequel on détermine ledit schéma d'exploitation en évaluant une pluralité de schémas d'exploitation en fonction d'au moins un critère prédéfini, ladite évaluation comprenant des simulations d'injection de solutions aqueuses pour différentes valeurs de salinité dans ledit réservoir, et on exploite lesdits hydrocarbures dudit réservoir selon ledit schéma satisfaisant ledit critère.

**6.** Procédé selon l'une des revendications précédentes, dans lequel on exploite lesdits hydrocarbures dudit réservoir en injectant ladite solution aqueuse saline, en forant au moins un puits injecteur et au moins un puits producteur dudit schéma d'exploitation, et en installant des infrastructures de production adaptées au développement du gisement.

Fig. 1

**Europäisches Patentamt**
**European Patent Office**
**Office européen des brevets**

# RAPPORT DE RECHERCHE EUROPEENNE

Numéro de la demande

EP 19 20 3281

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EMAD WALEED AL-SHALABI ET AL: "Mysteries behind the Low Salinity Water Injection Technique", JOURNAL OF PETROLEUM ENGINEERING, vol. 2014, 1 janvier 2014 (2014-01-01), pages 1-11, XP055630203, ISSN: 2314-5005, DOI: 10.1155/2014/304312 | 1,4-6 | INV. E21B43/20 |
| A | * le document en entier * ----- | 2,3 | |
| A | US 2017/234126 A1 (AL-SHALABI EMAD WALID [US] ET AL) 17 août 2017 (2017-08-17) * abrégé * * alinéa [0111] * * alinéa [0126] - alinéa [0127] * ----- | 1-6 | |
| A | ETEMADI ARASH ET AL: "Modelling low-salinity waterflooding: Effect of divalent cations and capillary pressure", JOURNAL OF PETROLEUM SCIENCE AND ENGINEERING, vol. 149, 6 octobre 2016 (2016-10-06), pages 1-8, XP029877500, ISSN: 0920-4105, DOI: 10.1016/J.PETROL.2016.10.012 * le document en entier * ----- | 1-6 | DOMAINES TECHNIQUES RECHERCHES (IPC) E21B |

-/--

Le présent rapport a été établi pour toutes les revendications

| Lieu de la recherche | Date d'achèvement de la recherche | Examinateur |
|---|---|---|
| La Haye | 20 mars 2020 | Hustedt, Bernhard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 20 3281

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | A. JAHANBANI GHAHFAROKHI ET AL: "Numerical Simulation Of Low Salinity Water Flooding: Wettability Alteration Considerations", ECMOR XVI, 16TH EUROPEAN CONFERENCE ON THE MATHEMATICS OF OIL RECOVERY, 3 septembre 2018 (2018-09-03), XP055629636, Netherlands ISSN: 2214-4609, DOI: 10.3997/2214-4609.201802165 ISBN: 978-94-628-2260-3 * le document en entier * ----- | 1-6 | |
| A | HASAN AL-IBADI ET AL: "An Updated Fractional Flow Model of Low Salinity Water Flooding with Respect to the Impact of Salt Diffusion", SPE TRINIDAD AND TOBAGO SECTION ENERGY RESOURCES CONFERENCE, 1 janvier 2018 (2018-01-01), XP055629692, DOI: 10.2118/191222-MS * le document en entier * ----- | 1-6 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 20 mars 2020 | Hustedt, Bernhard |

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 19 20 3281

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2020

| Document brevet cité au rapport de recherche | Date de publication | Membre(s) de la famille de brevet(s) | Date de publication |
|---|---|---|---|
| US 2017234126 A1 | 17-08-2017 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JACKSON, M.D. ; VINOGRADOV, J. ; HAMON, G. ; CHAMEROIS, M.** Evidence , mechanisms and improved understanding of controlled salinity waterflooding part 1: Sandstones. *Fuel,* 2016, vol. 185, 772-793
- **JERAULD, G.R. ; LIN, C.Y. ; WEBB, K.J. ; SECCOMBE, J.C.** Modeling Low-Salinity Waterflooding. *SPE Reservoir Evaluation & Engineering,* Décembre 2008, 1000-1012
- **SKAUGE, A.** *Low Salinity Flooding - A Critical Review, paper A11 presented at the 17th European Symposium on IOR,* 2013
- **YOUSEF, A.A. ; AL-SALEH, S. ; AL-KAABI, A. ; AL-JAWFI, M.** Laboratory Investigation of the Impact of Injection-Water Salinity and Ionic Content on Oil Recovery From Carbonate Reservoirs, paper SPE 137634. *SPE Reservoir Evaluation & Engineering Journal,* 2011, vol. 14 (5), 578-593